(19) **Europäisches Patentamt / European Patent Office / Office européen des brevets**

(11) **EP 4 441 882 B1**

(12) # EUROPEAN PATENT SPECIFICATION

(45) Date of publication and mention of the grant of the patent:
**29.10.2025 Bulletin 2025/44**

(21) Application number: **22839383.1**

(22) Date of filing: **27.12.2022**

(51) International Patent Classification (IPC):
**F03D 13/10** (2016.01)  **F03D 17/00** (2016.01)
**G01D 5/245** (2006.01)  **H02P 6/18** (2016.01)
**H02K 7/18** (2006.01)  **H02K 11/21** (2016.01)
**H02K 11/22** (2016.01)  **H02K 11/215** (2016.01)

(52) Cooperative Patent Classification (CPC):
**H02P 6/183; F03D 13/108; F03D 17/028; G01D 5/2454; H02K 11/21; H02K 11/215; H02K 11/22;** F05B 2270/326; H02K 7/1838; Y02E 10/72

(86) International application number:
**PCT/EP2022/087889**

(87) International publication number:
**WO 2023/143848 (03.08.2023 Gazette 2023/31)**

(54) **HIGH-PRECISION ROTOR POSITION DETERMINATION FOR USE IN POSITION AND/OR TORQUE CONTROL AT LOW SPEED**

HOCHPRÄZISE ROTORPOSITIONSBESTIMMUNG ZUR VERWENDUNG IN DER POSITIONS- UND/ODER DREHMOMENTSTEUERUNG BEI NIEDRIGER DREHZAHL

DÉTERMINATION DE POSITION DE ROTOR DE HAUTE PRÉCISION POUR UNE UTILISATION DANS UNE COMMANDE DE POSITION ET/OU DE COUPLE À FAIBLE VITESSE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **25.01.2022 EP 22153334**

(43) Date of publication of application:
**09.10.2024 Bulletin 2024/41**

(73) Proprietor: **Siemens Gamesa Renewable Energy A/S**
**7330 Brande (DK)**

(72) Inventors:
• **FREIRE, Nuno Miguel Amaral**
**3150-109 Condeixa (PT)**
• **FULCHER, Robert Vernon**
**Stoke on Trent Staffordshire ST7 4EN (GB)**

• **GODRIDGE, Paul**
**Cheadle Greater Manchester SK8 7HX (GB)**
• **LUND, Mogens**
**6920 Videbaek (DK)**
• **RINGGAARD, Jesper Dommerby**
**7400 Herning (DK)**
• **WU, Zhan-Yuan**
**Sheffield S10 4BB (GB)**

(74) Representative: **SGRE-Association**
**Siemens Energy Global GmbH & Co. KG**
**SE I IM P Intellectual Property**
**Siemenspromenade 9**
**91058 Erlangen (DE)**

(56) References cited:
**EP-A2- 2 887 023      DE-A1- 102011 101 085**
**DE-U1- 202010 014 680      US-A1- 2008 204 767**

**Description**

Field of Invention

The present invention relates to the field of electrical machines, such as wind turbine generators. In particular, the present invention relates to an assembly for determining the electrical angle of a rotor in an electrical machine, such as a wind turbine generator. The present invention further relates to a wind turbine generator comprising such an assembly, and to a method of determining the electrical angle of a rotor in an electrical machine, such as a wind turbine generator.

Art Background

The electrical drive train of a direct-drive wind turbine is required to enable various modes/functions other than power production, the best-known being rotor positioning, which must be able to turn the rotor of a turbine slowly (at a fraction of rpm) and hold it stationary at a target position (0 rpm or as close as possible). Recent developments aim at performing horizontal single blade mounting (HSBM) with the electrical drive train, thus avoiding the installation of a hydraulic tool dedicated to blade installation (also known as HSBM tool). HSBM requires very accurate position and torque control up to the maximum allowable torque. Accordingly, corresponding position feedback and control methods are required.

Typically, torque control of a permanent magnet generator (PMG) is achieved by implementing an inner current controller, which requires accurate and high-resolution electrical rotor position (e.g. for Park transformations). If rotor position information is not available or unreliable, the generated torque is unpredictable. Thus, the turbine's ability to provide the aforementioned functions will be impaired and its structural integrity put at risk. It happens that sensorless (back-emf based) methods employed for position estimation under power production mode (medium/high speed operation) fail at very low speeds. Some machine technologies (e.g., interior permanent magnet (PM) machines) are well suited for alternative sensorless methods, like high-frequency signal injection (HFI) based observers. On the other hand, surface mounted PM and fractional slot concentrated winding machines may not offer a good enough position dependent signature for HFI sensorless methods, forcing the adoption of sensors for position measurement.

High performance motion control often employs shaft-mounted incremental encoders. However, a desirable application for a large outer rotor PMG (permanent magnet generator) presents two major difficulties: (1) the requirement to know absolute rotor position accurately - this is not provided by an incremental encoder; and (2) the lack of a rotor shaft for easy installation of an encoder.

US 2008/204767 A1 discloses an apparatus comprising an inspection head with a distance measuring unit for moving along a commutator surface across bars and insulating layers.

Therefore, there may be a need for simple and cost-efficient ways of determining rotor position with high precision and reliability in an electrical machine, such as a direct-drive wind turbine generator with outer rotor.

Summary of the Invention

This need may be met by the subject matter according to the independent claims. Advantageous embodiments of the present invention are described by the dependent claims.

According to a first aspect of the invention there is provided an assembly for determining the electrical angle of a rotor in an electrical machine, such as a wind turbine generator with outer rotor. The assembly comprises: (a) an encoder assembly configured to be mounted on a stator of the electrical machine, the encoder assembly having an encoder wheel configured to contact a surface of the rotor to obtain relative rotor rotation information based on rotation of the encoder wheel, (b) an electrical angle observer configured to provide an absolute electrical angle, and (c) a processing device coupled to communicate with the encoder and the electrical angle observer and configured to determine the electrical angle of the rotor based on the relative rotor rotation information and the absolute electrical angle.

This aspect of the invention is based on the idea that an absolute electrical angle provided by an electrical angle observer is combined with relative rotor rotation information obtained by an encoder to determine the electrical angle of the rotor with high precision and high bandwidth. In other words, the encoder is capable of detecting small amounts of rotor rotation and thus corresponding small changes in the electrical angle of the rotor, while the electrical angle observer provides absolute electrical angle information that cannot be obtained by the encoder.

According to an embodiment of the invention, the processing device is configured to utilize the absolute electrical angle as an initial value in the determination of the electrical angle of the rotor.

In other words, the absolute electrical angle from the observer is used as a starting point or reference value in the determination of the electrical angle, while the deviations from the initial value are tracked by the encoder.

According to a further embodiment of the invention, the electrical angle observer comprises an HFI (high frequency injection) observer.

In other words, the electrical angle observer is capable of determining the absolute electrical angle by injecting high frequency signals into the generator and detecting corresponding signals in the generator output.

According to a further embodiment of the invention, the processing device is further configured to determine the electrical angle of the rotor based on a gear ratio between the encoder wheel and the surface of the rotor.

By considering the gear ratio between the encoder wheel and the surface of the rotor, the actual rotation of the rotor can be derived from the rotation of the encoder wheel.

According to a further embodiment of the invention, the processing device is configured to utilize a predetermined fixed gear ratio.

In this embodiment, the gear ratio is fixed and predetermined, e.g., by measuring the respective sizes of the rotor surface and the encoder wheel prior to installation or use.

According to a further embodiment of the invention, the processing device is configured to determine and utilize a dynamically corrected gear ratio.

In other words, the processing device is capable of correcting the gear ratio in a dynamic manner, i.e., continuously during operation. Thereby, by utilizing the thus dynamically updated gear ratio, the precision of the determined electrical angle is further improved.

According to a further embodiment of the invention, the processing device is configured to determine a gear ratio correction factor based on the relative rotor rotation information and the absolute electrical angle.

In other words, the gear ratio correction factor is determined on the basis of the output (relative rotor rotation information) from the encoder and the output (absolute electrical angle) from the electrical angle observer.

According to a further embodiment of the invention, the processing device is configured to determine the gear ratio correction factor by performing a closed-loop control algorithm that receives a difference between the determined electrical angle of the rotor and the absolute electrical angle.

In other words, a closed-loop control algorithm is used to determine the gear ratio correction factor in such a way that the difference between the determined electrical angle and the absolute electrical angle (provided by the electrical angle observer) is minimized.

According to a further embodiment of the invention, the processing device is configured to determine the gear ratio correction factor by performing a closed-loop control algorithm that receives a difference between an integrated first rotor speed signal and an integrated second rotor speed signal. The first rotor speed signal is calculated based on the determined electrical angle of the rotor. The second rotor speed signal is calculated based on the absolute electrical angle.

In other words, in this embodiment the closed-loop control algorithm minimizes a difference between rotor angles obtained by integrating first and second rotor speed signals, respectively, where the first rotor speed signal is derived from the determined electrical angle of the rotor and the second rotor speed signal is derived from the absolute electrical angle (provided by the electrical angle observer).

This embodiment may be particularly advantageous in cases where the rotor speed is used for other purposes and thus already available.

According to a further embodiment of the invention, the processing device is configured to determine the dynamically corrected gear ratio based on a predetermined fixed gear ratio and the gear ratio correction factor.

For example, the gear ratio GR may be determined as $GR = GR_0 \cdot (1 - GR_{cf})$, where $GR_0$ denotes the predetermined fixed gear ratio and $GR_{cf}$ denotes the gear ratio correction factor.

According to a second aspect of the invention, there is provided a wind turbine generator comprising: (a) a stator, (b) a rotor arranged to rotate around the stator, (c) a wind turbine controller, and (d) an assembly according to any one of the preceding claims, wherein the encoder is mounted on the stator, wherein the encoder wheel contacts a surface of the rotor, and wherein the wind turbine controller is configured to perform rotor position control utilizing the determined electrical angle as a control signal.

This aspect of the invention is essentially based on the same idea as the first aspect discussed above and benefits from the precise and rapid determination of the electrical angle while performing rotor position control.

The rotor may in particular be an outer rotor. Furthermore, the encoder wheel may in particular contact an inner surface of the rotor.

According to a third aspect of the invention, there is provided a method of determining the electrical angle of a rotor in an electrical machine, such as a wind turbine generator with outer rotor. The method comprises: (a) arranging an encoder having an encoder wheel such that the encoder wheel contacts a surface of the rotor to obtain relative rotor rotation information based on rotation of the encoder wheel, (b) providing an absolute electrical angle by means of an electrical angle observer, and (c) determining the electrical angle of the rotor based on the relative rotor rotation information and the absolute electrical angle.

This aspect of the invention is essentially based on the same idea as the first aspect discussed above and relies in a corresponding method.

According to a further embodiment of the invention, the absolute electrical angle is utilized as an initial value in the determination of the electrical angle of the rotor.

In other words, the absolute electrical angle from the observer is used as a starting point or reference value in the determination of the electrical angle, while the deviations from the initial value are tracked by the encoder.

According to a further embodiment of the invention, determining the electrical angle of the rotor is based on a gear ratio between the encoder wheel and the surface of the rotor.

By considering the gear ratio between the encoder wheel and the surface of the rotor, the actual rotation of the rotor can be derived from the rotation of the encoder wheel.

According to a further embodiment of the invention, the method further comprises determining a gear ratio correction factor based on the relative rotor rotation information and the absolute electrical angle.

In other words, the gear ratio correction factor is determined on the basis of the output (relative rotor rotation information) from the encoder and the output (absolute electrical angle) from the electrical angle observer.

It is noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless otherwise indicated, in addition to any combination of features belonging to one type of subject matter also any combination of features relating to different subject matters, in particular to combinations of features of the method type claims and features of the apparatus type claims, is part of the disclosure of this document.

The aspects defined above and further aspects of the present invention are apparent from the examples of embodiments to be described hereinafter and are explained with reference to the examples of embodiments. The invention will be described in more detail hereinafter with reference to examples of embodiments. However, it is explicitly noted that the invention is not limited to the described exemplary embodiments.

Brief Description of the Drawing

Figure 1 shows an outer rotor and an encoder wheel in accordance with an exemplary embodiment.

Figure 2 shows an encoder assembly in accordance with an exemplary embodiment.

Figure 3 shows a block diagram of a processing device in accordance with an exemplary embodiment.

Figure 4 shows an example of initialization of electrical angle output in accordance with an exemplary embodiment.

Figure 5 shows block diagrams of gear ratio correction in accordance with two exemplary embodiments.

Figure 6 shows plots of the influence of gear ratio correction.

Figure 7 shows a block diagram of a system for performing rotor position control utilizing an assembly according to an exemplary embodiment.

Figure 8 shows a flow chart of a method according to an exemplary embodiment.

Detailed Description

The illustration in the drawing is schematic. It is noted that in different figures, similar or identical elements are provided with the same reference numerals or with reference numerals which differ only within the first digit.

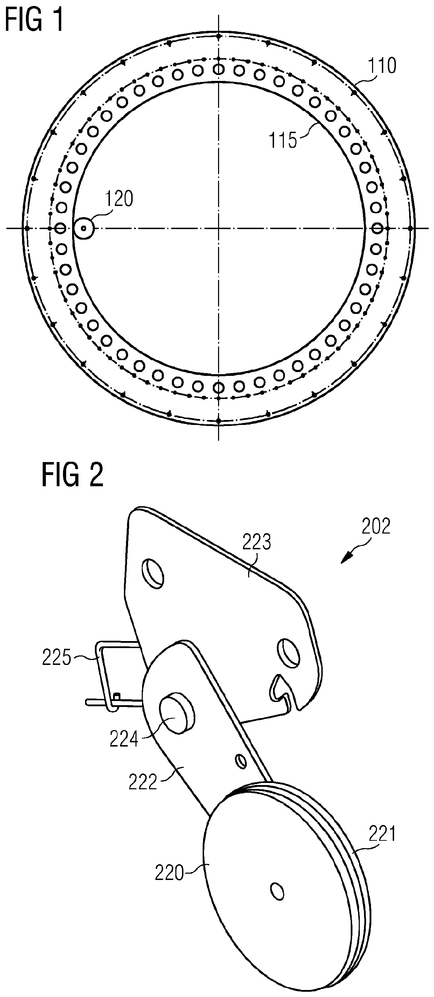

Figure 1 shows an outer rotor 110 and an encoder wheel 120 of an assembly (described further below) according to an exemplary embodiment. As shown, the encoder wheel 120 has a significantly smaller diameter than the outer rotor 110 and is arranged to contact an inner surface 115 of the rotor 110. In the present embodiment, the inner surface 115 is part of a rotor brake disc. As can be seen, when the outer rotor 110 rotates, this will cause a corresponding rotation of the encoder wheel 120.

Figure 2 shows an encoder assembly 202 in accordance with an exemplary embodiment. The encoder assembly 202 comprises the encoder wheel 220 having a circumferential surface 221 for contacting an opposing surface, such as the inner surface 115 of the rotor 110 in Figure 1. The circumferential surface 221 preferably comprises rubber or a similar material. The encoder wheel 220 is rotatably mounted on encoder arm 222 which is pivotably coupled to encoder mounting bracket 223 via joint 224. The encoder 202 further comprises a spring arrangement 225 arranged to bias the circumferential surface 221 of the encoder wheel 220 against the opposing surface (e.g., the inner surface 115 of the braking disc of rotor 110 in Figure 1). The encoder mounting bracket 223 is configured to be (permanently or temporarily) mounted to a non-rotating part, such as a stator of an electrical machine, in the vicinity of the opposing surface (not shown in Figure 2). The encoder assembly 202 comprises appropriate sensors, e.g., magnetic, mechanical and/or optical sensors, for detecting rotation of the encoder wheel 220 and correspondingly incrementing/decrementing a counter as known in the art.

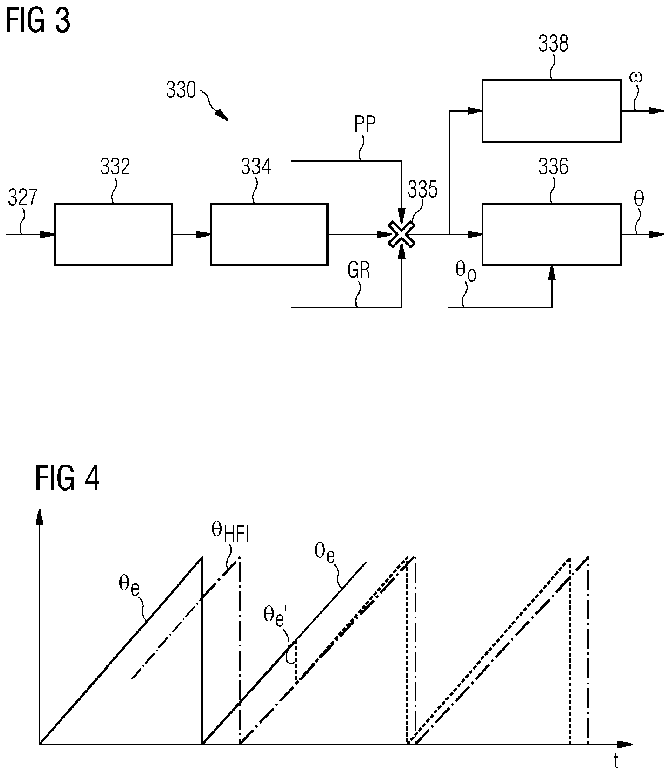

Figure 3 shows a block diagram of a processing device 330 in accordance with an exemplary embodiment. The processing device 330 comprises a scaling unit 332, an angle increment calculation unit 334, a multiplier 335, an electrical angle calculation unit 336, and a speed calculation unit 338.

The scaling unit 332 receives a signal 327 representative of a count from the encoder 202 and scales the count value to obtain a raw angle value, for example by multiplying the count value by 360° and dividing it by the corresponding maximum count value, e.g., 40000.

The raw angle value is supplied to the angle increment unit 334 which calculates an angle increment value corresponding to one processing cycle, i.e. a predetermined period of time.

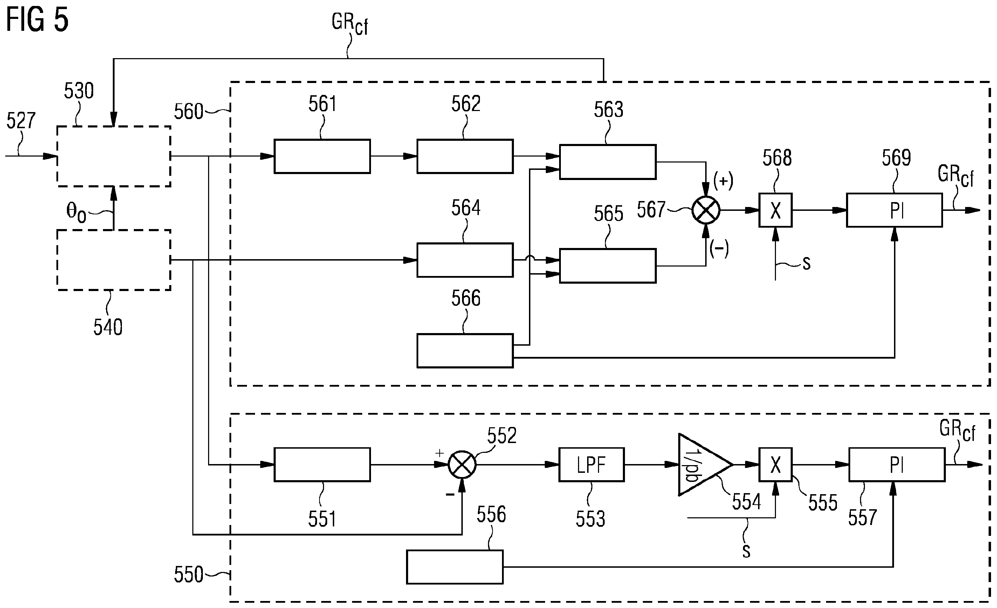

The resulting angle increment value is supplied to multiplier 335 where it is multiplied with the number of generator pole pairs pp and divided by the gear ratio GR between the encoder wheel and the opposing surface of the rotor, i.e., the ratio between the number of encoder wheel turns and corresponding rotor turns which is equal to the ratio between the rotor diameter and the encoder wheel diameter. The gear ratio GR may be a fixed value or a dynamically corrected value (as described further below in conjunction with Figure 5).

The resulting electrical angle increment value is supplied to both electrical angle calculation unit 336 and speed calculation unit 338. The electrical angle calculation unit 336 also receives an initial electrical angle value $\theta_0$ and calculates the electrical angle value $\theta$ by adding the received electrical angle increment value to the previous electrical angle value (or the initial electrical angle value $\theta_0$ as appropriate). The speed calculation unit 338 calculates the electrical angle speed $\omega$ by dividing the received electrical angle increment value by the corresponding period of time.

Figure 4 shows an example of initialization of electrical angle output in accordance with an exemplary embodiment. More specifically, Figure 4 shows an uncorrected electrical angle $\theta_e$ from the encoder and a corresponding electrical angle $\theta_{HFI}$ obtained utilizing an HFI observer as functions of time t. As can be seen, the two electrical angles $\theta_e$ and $\theta_{HFI}$ are not identical. However, by correcting the encoder angle by an amount corresponding to the difference, a corrected electrical angle $\theta_e'$ from the encoder is obtained which is very close to $\theta_{HFI}$.

Figure 5 shows block diagrams of gear ratio correction in accordance with two exemplary embodiments. More specifically, Figure 5 shows a processing device 530 and an electrical angle observer 540, which may preferably be an HFI observer. Furthermore, Figure 5 shows two gear ratio correction blocks 550 and 560. It should be noted that either one of the blocks 550 and 560 can be used on its own in a respective embodiment. In other words, the blocks 550 and 560 are shown in the same figure for ease of illustration but represent alternative gear ratio correction methods.

The gear ratio correction block 550 comprises angle wrap unit 551, subtraction unit 552, low pass filter 553, gain adjustment unit 554, multiplier 555, enabling unit 556, and PI control unit 557. The angle wrap unit 551 receives the electrical angle from the processing device 530 and supplies the processed electrical angle to the subtraction unit 552. The subtraction unit 552 also receives the absolute electrical angle from the electrical angle observer 540 and subtracts it from the electrical angle supplied by angle wrap unit to generate an error signal which is then low pass filtered by low pass filter 553 and supplied to the gain adjustment unit 554 which applies a factor 1/pp to obtain an error value corresponding to the mechanical angle of the rotor. The resulting signal is multiplied with a value s by multiplier 555 and supplied to the PI control unit 557. The value s is indicative of the speed direction of the rotor (e.g., s=1 indicates clockwise rotation, s=-1 indicates counterclockwise rotation). If asserted by a corresponding signal from enabling unit 556, the PI control unit 557 outputs a gear ratio correction factor $GR_{cf}$ which is supplied to the processing device to allow dynamic correction of the gear ratio GR, e.g., by calculating $GR = GR_0 \cdot (1 - GR_{cf})$, where $GR_0$ denotes a predetermined fixed gear ratio.

The gear ratio correction block 560 comprises angle wrap unit 561, a first speed calculation unit 562 with low pass filter, a first integration unit 563 with angle wrap, a second speed calculation unit 564 with low pass filter, a second integration unit 565 with angle wrap, an enabling unit 566, subtraction unit 567, multiplier 568, and PI control unit 569. The angle wrap unit 561 receives the electrical angle from the processing device 530 and supplies the processed electrical angle to the first speed calculation unit 562 with low pass filter. The corresponding calculated first speed is supplied to the first integration unit 563 with angle wrap, which outputs a first mechanical angle as a result. The second speed calculation unit 564 with low pass filter receives the absolute electrical angle from the electrical angle observer 540 and the corresponding calculated second speed is supplied to the second integration unit 565 with angle wrap, which outputs a second mechanical angle as a result. The subtracting unit 567 receives the first and second mechanical angles and outputs a corresponding error signal to multiplier 568 which multiplies the error signal with a value s before supplying it to the PI control unit 569. The value s is indicative of the speed direction of the rotor (e.g., s=1 indicates clockwise rotation, s=-1 indicates counterclockwise rotation). If asserted by a corresponding signal from enabling unit 566, the PI control unit 569 outputs a gear ratio correction factor $GR_{cf}$ which is supplied to the processing device to allow dynamic correction of the gear ratio GR, e.g., by calculating $GR = GR_0 \cdot (1 - GR_{cf})$, where $GR_0$ denotes a predetermined fixed gear ratio.

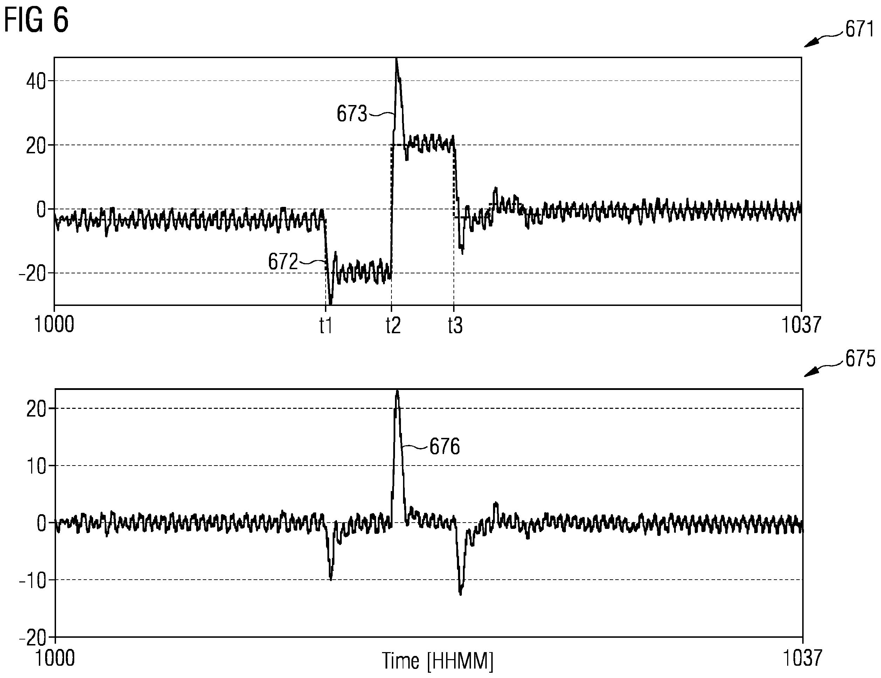

Figure 6 shows plots of the influence of gear ratio correction. More specifically, the upper plot 671 in Figure 6 shows gear ratio parameter error 672 and gear ratio correction 673 as functions of time, while the lower plot 675 shows the angle difference 676 (i.e., the difference between the angle provided by the processing device 530 and the angle provided by the observer 540 in Figure 5) as a function of time. The plots 671 and 675 correspond to a test performed on a wind turbine generator with the HFI sensorless observer 540 working together with the encoder GR observer 550, 560. The following is a result for the validation. By default, the GR parameter $GR_0$ was set at 30.5, which was a little higher than the real value of 29.5 in this test. In the first part of the test, $GR_0$ was step increased by 20%. Due to the incorrect gear ratio, the angle difference 676 between HFI and encoder deviated from 0, and after a short period of transient, a GR correction value was produced from the GR observer, which was -20%, to compensate for the positive offset in the parameter setting at t=t1. In the second part of test, the step change in GR parameter was made by 20% decrease, and in this case the GR observer worked out the correct compensation value of +20% at t=t2. Therefore, the error in GR can be corrected, and the encoder can provide accurate position after the correction.

In general, the gear ratio correction techniques disclosed herein can effectively handle variations in gear ratio occurring during operation, e.g., as a result of rubber compression, wear, temperature variations, slips, and production tolerances.

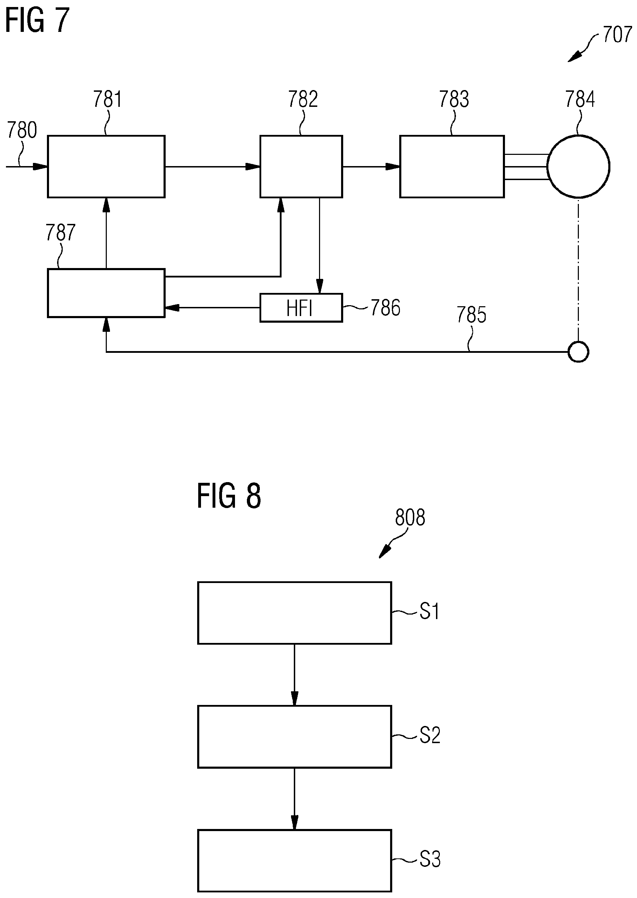

Figure 7 shows a block diagram 707 of a system for performing rotor position control utilizing an assembly according to an exemplary embodiment. More specifically, the system comprises a reference input 780, a motion control unit 781, a vector control unit 782, a converter 783, a generator 784, position feedback 785, an HFI observer 786, and a position determining unit 787. The motion control unit 781 is configured to control the generator 784 to obtain a desired rotor position or rotor speed or to produce a certain torque in response to references received at 780. The motion control unit 781 supplies corresponding currents to the vector control unit 782 which in turn supplies voltage reference values to converter 783 which is connected to the turbine generator 784. The rotor position feedback 785 is provided (by an encoder) to position determining unit 787 together with a position estimate from HFI observer 786. The rotor position calculated by the position determining unit 787 is supplied to both the motion control unit 781 and the vector control unit 782 as feedback that is used to control the converter 783 accordingly.

Figure 8 shows a flow chart 808 of a method for determining the electrical angle of a rotor in an electrical machine, such as a wind turbine generator with outer rotor, according to an exemplary embodiment. The method 808 begins at S1 with arranging an encoder having an encoder wheel such that the encoder wheel contacts a surface of the rotor to obtain relative rotor rotation information based on rotation of the encoder wheel. At S2, an absolute electrical angle is provided by means of an electrical angle observer. At S3, the electrical angle of the rotor is determined based on the relative rotor rotation information and the absolute electrical angle.

Generally, as shown in Figure 1, due to contact between the surface of encoder wheel 120 and the opposing surface 115 of the rotor (e.g., brake disc), the rotation of the rotor is transformed to rotation of the encoder wheel 120. The ratio of the two rotational speeds is the inverse of ratio between the brake disc diameter and wheel diameter (when assuming no slip). Thus, the gear ratio GR is given as the ratio between the respective diameters D or number of turns N:

$$GR = D_{rotor}/D_{encoder} = N_{encoder}/N_{rotor}.$$

From the rotation of the encoder wheel 120, the generator rotation can be inferred, and so the generator electrical angle. For example, at an encoder count increment, *ΔEncInput,* the change in generator electrical angle will be:

$$\Delta EncTheta0 = GenPp * 360 / (EncMaxCount * GR) * \Delta EncInput.$$

Here, *GR* denotes gear ratio, *GenPp* is the number of generator pole pairs, *EncMaxCount* denotes the maximum count of encoder input representing 360 degrees (typically, this value is 40000 if the encoder has 10000 lines), and *ΔEncInput* is the count increment of encoder signal per processing cycle.

The generator electrical angle is calculated as:

$$EncTheta0 = EncTheta0Last + \Delta EncTheta0.$$

Here, *EncTheta0Last* is the last scan of encoder angle, which can be initialized at the start of calculation by the HFI angle, for example.

Once the generator angle has been calculated, its speed can be derived with one of the conventional methods, such as (i) by the angle change between two scans (i.e., in the time period of processing cycle), or (ii) by the duration of time when the encoder count is changed by 1.

As the proposed technique with encoder control aims for zero or low speed operation, a low pass filter shall be applied to smooth out the above calculated speed.

Given a particular application, for example, with a generator of 90 pole-pairs, an encoder of 10000 lines, and a gear ratio GR of 32, the resolution of machine electrical angle by encoder measurement can be about, 0.02 electrical degrees. This would allow high precision and high-performance motion control.

However, any uncertainty in the value of the gear ratio GR, due to tolerances in the wheel diameters, or compression of the rubber tire, will result in a corresponding speed measurement error, which in turn will result in an integrating angle measurement error and thus error in the machine electrical angle. This is handled effectively by the dynamic gear ratio correction described above.

It is noted that the term "comprising" does not exclude other elements or steps and the use of the articles "a" or "an" does not exclude a plurality. Also elements described in association with different embodiments may be combined. It is further noted that reference signs in the claims are not to be construed as limiting the scope of the claims.

**Claims**

1.  An assembly for determining the electrical angle of a rotor in an electrical machine, such as a wind turbine generator the arrangement comprising:

    an encoder assembly configured to be mounted on a stator of the electrical machine, the encoder assembly having an encoder wheel configured to contact a surface of the rotor to obtain relative rotor rotation information based on rotation of the encoder wheel,
    an electrical angle observer configured to provide an absolute electrical angle, and
    a processing device coupled to communicate with the encoder and the electrical angle observer and configured to determine the electrical angle of the rotor based on the relative rotor rotation information and the absolute electrical angle.

2.  The assembly according to the preceding claim, wherein the processing device is configured to utilize the absolute electrical angle as an initial value in the determination of the electrical angle of the rotor.

3.  The assembly according to any one of the preceding claims, wherein the electrical angle observer comprises an HFI (high frequency injection) observer.

4.  The assembly according to any one of the preceding claims, wherein the processing device is further configured to determine the electrical angle of the rotor based on a gear ratio between the encoder wheel and the surface of the rotor.

5.  The assembly according to the preceding claim, wherein the processing device is configured to utilize a predetermined fixed gear ratio.

6.  The assembly according to claim 4, wherein the processing device is configured to determine and utilize a dynamically corrected gear ratio.

7.  The assembly according to the preceding claim, wherein the processing device is configured to determine a gear ratio correction factor based on the relative rotor rotation information and the absolute electrical angle.

8.  The assembly according to the preceding claim, wherein the processing device is configured to determine the gear ratio correction factor by performing a closed-loop control algorithm that receives a difference between the determined electrical angle of the rotor and the absolute electrical angle.

9.  The assembly according to claim 7, wherein the processing device is configured to determine the gear ratio correction factor by performing a closed-loop control algorithm that receives a difference between an integrated first rotor speed signal and an integrated second rotor speed signal, wherein the first rotor speed signal is calculated based on the determined electrical angle of the rotor, and wherein the second rotor speed signal is calculated based on the absolute electrical angle.

10. The assembly according to any one of claims 7 to 9, wherein the processing device is configured to determine the dynamically corrected gear ratio based on a predetermined fixed gear ratio and the gear ratio correction factor.

11. A wind turbine generator comprising:

a stator,
a rotor arranged to rotate around the stator,
a wind turbine controller, and
an assembly according to any one of the preceding claims,

wherein the encoder is mounted on the stator, wherein the encoder wheel contacts a surface of the rotor, and wherein the wind turbine controller is configured to perform rotor position control utilizing the determined electrical angle as a control signal.

12. A method of determining the electrical angle of a rotor in an electrical machine, such as a wind turbine generator, the method comprising:

arranging an encoder having an encoder wheel such that the encoder wheel contacts a surface of the rotor to obtain relative rotor rotation information based on rotation of the encoder wheel,
providing an absolute electrical angle by means of an electrical angle observer, and
determining the electrical angle of the rotor based on the relative rotor rotation information and the absolute electrical angle.

13. The method according to the preceding claim, wherein the absolute electrical angle is utilized as an initial value in the determination of the electrical angle of the rotor.

14. The method according to claim 12 or 13, wherein determining the electrical angle of the rotor is based on a gear ratio between the encoder wheel and the surface of the rotor.

15. The method according to the preceding claim, further comprising determining a gear ratio correction factor based on the relative rotor rotation information and the absolute electrical angle.

**Patentansprüche**

1. Baugruppe zum Bestimmen des elektrischen Winkels eines Rotors in einer elektrischen Maschine, wie etwa einem Windkraftanlagengenerator, wobei die Anordnung umfasst:

eine Encoder-Baugruppe, die konfiguriert ist, an einem Stator der elektrischen Maschine montiert zu werden, wobei die Encoder-Baugruppe ein Encoderrad aufweist, das konfiguriert ist, eine Oberfläche des Rotors zu kontaktieren, um relative Rotordrehungsinformationen basierend auf einer Drehung des Encoderrads zu erhalten,
einen elektrischen Winkelbeobachter, der konfiguriert ist, einen absoluten elektrischen Winkel bereitzustellen, und
eine Verarbeitungsvorrichtung, die zum Kommunizieren mit dem Encoder und dem elektrischen Winkelbeobachter gekoppelt ist und konfiguriert ist, den elektrischen Winkel des Rotors basierend auf den relativen Rotordrehungsinformationen und dem absoluten elektrischen Winkel zu bestimmen.

2. Baugruppe nach dem vorstehenden Anspruch, wobei die Verarbeitungsvorrichtung konfiguriert ist, den absoluten elektrischen Winkel als einen Anfangswert bei der Bestimmung des elektrischen Winkels des Rotors zu nutzen.

3. Baugruppe nach einem der vorstehenden Ansprüche, wobei der elektrische Winkelbeobachter einen HFI-Beobachter (HFI: High Frequency Injection - Hochfrequenz-Injektion) umfasst.

4. Baugruppe nach einem der vorstehenden Ansprüche, wobei die Verarbeitungsvorrichtung ferner konfiguriert ist, den elektrischen Winkel des Rotors basierend auf einem Übersetzungsverhältnis zwischen dem Encoderrad und der Oberfläche des Rotors zu bestimmen.

5. Baugruppe nach dem vorstehenden Anspruch, wobei die Verarbeitungsvorrichtung konfiguriert ist, ein vorbestimmtes festes Übersetzungsverhältnis zu nutzen.

6. Baugruppe nach Anspruch 4, wobei die Verarbeitungsvorrichtung konfiguriert ist, ein dynamisch korrigiertes Übersetzungsverhältnis zu bestimmen und zu nutzen.

**7.** Baugruppe nach dem vorstehenden Anspruch, wobei die Verarbeitungsvorrichtung konfiguriert ist, einen Übersetzungsverhältniskorrekturfaktor basierend auf den relativen Rotordrehungsinformationen und dem absoluten elektrischen Winkel zu bestimmen.

**8.** Baugruppe nach dem vorstehenden Anspruch, wobei die Verarbeitungsvorrichtung konfiguriert ist, den Übersetzungsverhältniskorrekturfaktor durch Durchführen eines Steueralgorithmus mit geschlossener Schleife zu bestimmen, der eine Differenz zwischen dem bestimmten elektrischen Winkel des Rotors und dem absoluten elektrischen Winkel empfängt.

**9.** Baugruppe nach Anspruch 7, wobei die Verarbeitungsvorrichtung konfiguriert ist, den Übersetzungsverhältniskorrekturfaktor durch Durchführen eines Steueralgorithmus mit geschlossener Schleife zu bestimmen, der eine Differenz zwischen einem integrierten ersten Rotorgeschwindigkeitssignal und einem integrierten zweiten Rotorgeschwindigkeitssignal empfängt, wobei das erste Rotorgeschwindigkeitssignal basierend auf dem bestimmten elektrischen Winkel des Rotors berechnet wird, und wobei das zweite Rotorgeschwindigkeitssignal basierend auf dem absoluten elektrischen Winkel berechnet wird.

**10.** Baugruppe nach einem der Ansprüche 7 bis 9, wobei die Verarbeitungsvorrichtung konfiguriert ist, das dynamisch korrigierte Übersetzungsverhältnis basierend auf einem vorbestimmten festen Übersetzungsverhältnis und dem Übersetzungsverhältniskorrekturfaktor zu bestimmen.

**11.** Windkraftanlagengenerator, umfassend:

einen Stator,
einen Rotor, der angeordnet ist, sich um den Stator zu drehen,
eine Windkraftanlagensteuerung, und
eine Baugruppe nach einem der vorstehenden Ansprüche,
wobei der Encoder am Stator montiert ist, wobei das Encoderrad eine Oberfläche des Rotors kontaktiert, und wobei die Windkraftanlagensteuerung konfiguriert ist, eine Rotorpositionssteuerung unter Verwendung des bestimmten elektrischen Winkels als ein Steuersignal durchzuführen.

**12.** Verfahren zum Bestimmen des elektrischen Winkels eines Rotors in einer elektrischen Maschine, wie etwa einem Windkraftanlagengenerator, wobei das Verfahren umfasst:

Anordnen eines Encoders mit einem Encoderrad, sodass das Encoderrad eine Oberfläche des Rotors kontaktiert, um relative Rotordrehungsinformationen basierend auf einer Drehung des Encoderrads zu erhalten,
Bereitstellen eines absoluten elektrischen Winkels mittels eines elektrischen Winkelbeobachters, und
Bestimmen des elektrischen Winkels des Rotors basierend auf den relativen Rotordrehungsinformationen und dem absoluten elektrischen Winkel.

**13.** Verfahren nach dem vorstehenden Anspruch, wobei der absolute elektrische Winkel als ein Anfangswert bei der Bestimmung des elektrischen Winkels des Rotors genutzt wird.

**14.** Verfahren nach Anspruch 12 oder 13, wobei das Bestimmen des elektrischen Winkels des Rotors auf einem Übersetzungsverhältnis zwischen dem Encoderrad und der Oberfläche des Rotors basiert.

**15.** Verfahren nach dem vorstehenden Anspruch, ferner umfassend Bestimmen eines Übersetzungsverhältniskorrekturfaktors basierend auf den relativen Rotordrehungsinformationen und dem absoluten elektrischen Winkel.

**Revendications**

**1.** Ensemble pour déterminer l'angle électrique d'un rotor dans une machine électrique, telle qu'un générateur d'éolienne, l'agencement comprenant :

un ensemble codeur configuré pour être monté sur un stator de la machine électrique, l'ensemble codeur ayant une roue de codeur configurée pour entrer en contact avec une surface du rotor afin d'obtenir des informations de rotation relative de rotor sur la base de la rotation de la roue de codeur,
un observateur d'angle électrique configuré pour fournir un angle électrique absolu, et

un dispositif de traitement couplé pour communiquer avec le codeur et l'observateur d'angle électrique et configuré pour déterminer l'angle électrique du rotor sur la base des informations de rotation relative de rotor et de l'angle électrique absolu.

2. Ensemble selon la revendication précédente, dans lequel le dispositif de traitement est configuré pour utiliser l'angle électrique absolu comme valeur initiale dans la détermination de l'angle électrique du rotor.

3. Ensemble selon l'une quelconque des revendications précédentes, dans lequel l'observateur d'angle électrique comprend un observateur HFI (injection de haute fréquence).

4. Ensemble selon l'une quelconque des revendications précédentes, dans lequel le dispositif de traitement est en outre configuré pour déterminer l'angle électrique du rotor sur la base d'un rapport d'engrenage entre la roue de codeur et la surface du rotor.

5. Ensemble selon la revendication précédente, dans lequel le dispositif de traitement est configuré pour utiliser un rapport d'engrenage fixe prédéterminé.

6. Ensemble selon la revendication 4, dans lequel le dispositif de traitement est configuré pour déterminer et utiliser un rapport d'engrenage corrigé dynamiquement.

7. Ensemble selon la revendication précédente, dans lequel le dispositif de traitement est configuré pour déterminer un facteur de correction de rapport d'engrenage sur la base des informations de rotation relative de rotor et de l'angle électrique absolu.

8. Ensemble selon la revendication précédente, dans lequel le dispositif de traitement est configuré pour déterminer le facteur de correction de rapport d'engrenage en exécutant un algorithme de commande en boucle fermée qui reçoit une différence entre l'angle électrique déterminé du rotor et l'angle électrique absolu.

9. Ensemble selon la revendication 7, dans lequel le dispositif de traitement est configuré pour déterminer le facteur de correction de rapport d'engrenage en exécutant un algorithme de commande en boucle fermée qui reçoit une différence entre un premier signal de vitesse de rotor intégré et un deuxième signal de vitesse de rotor intégré, dans lequel le premier signal de vitesse de rotor est calculé sur la base de l'angle électrique déterminé du rotor, et dans lequel le deuxième signal de vitesse de rotor est calculé sur la base de l'angle électrique absolu.

10. Ensemble selon l'une quelconque des revendications 7 à 9, dans lequel le dispositif de traitement est configuré pour déterminer le rapport d'engrenage corrigé dynamiquement sur la base d'un rapport d'engrenage fixe prédéterminé et du facteur de correction de rapport d'engrenage.

11. Générateur d'éolienne comprenant :

un stator,
un rotor agencé pour tourner autour du stator,
un dispositif de commande d'éolienne, et
un ensemble selon l'une quelconque des revendications précédentes,

dans lequel le codeur est monté sur le stator, dans lequel la roue de codeur est en contact avec une surface du rotor, et dans lequel le dispositif de commande d'éolienne est configuré pour effectuer la commande de position de rotor en utilisant l'angle électrique déterminé comme signal de commande.

12. Procédé de détermination de l'angle électrique d'un rotor dans une machine électrique, telle qu'un générateur d'éolienne, le procédé comprenant :

l'agencement d'un codeur ayant une roue de codeur de sorte que la roue de codeur entre en contact avec une surface du rotor pour obtenir des informations de rotation relative de rotor sur la base de la rotation de la roue de codeur,
la fourniture d'un angle électrique absolu au moyen d'un observateur d'angle électrique, et
la détermination de l'angle électrique du rotor sur la base des informations de rotation relative de rotor et de l'angle électrique absolu.

13. Procédé selon la revendication précédente, dans laquelle l'angle électrique absolu est utilisé comme valeur initiale dans la détermination de l'angle électrique du rotor.

14. Procédé selon la revendication 12 ou 13, dans lequel la détermination de l'angle électrique du rotor est basée sur un rapport d'engrenage entre la roue de codeur et la surface du rotor.

15. Procédé selon la revendication précédente, comprenant en outre la détermination d'un facteur de correction de rapport d'engrenage sur la base des informations de rotation relative de rotor et de l'angle électrique absolu.

FIG 1

FIG 2

## FIG 3

## FIG 4

FIG 5

## FIG 6

Time [HHMM]

EP 4 441 882 B1

# FIG 7

707

780 781 782 783 784

787

HFI 786

785

# FIG 8

808

S1

S2

S3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008204767 A1